# EUROPEAN PATENT APPLICATION

(11) **EP 4 694 167 A1**
(43) Date of publication of application: **11.02.2026**
(21) Application number: 24811262.5
(22) Date of filing: 15.04.2024
(51) Int. Cl.: H04N 23/69, H04N 23/61, H04N 23/667, H04N 23/65, H04N 23/57, H04N 23/54, H04M 1/02, H04M 1/72469, H04M 1/72454

(54) **METHOD FOR PROVIDING AUTO-FRAMING FUNCTION AND ELECTRONIC DEVICE SUPPORTING SAME**

(30) Priority: 23.05.2023 KR 20230065965; 26.06.2023 KR 20230082227
(71) Applicant: Samsung Electronics Co., Ltd., Suwon-si, Gyeonggi-do 16677 (KR)
(72) Inventor: JANG, Jongwoon, Suwon-si Gyeonggi-do 16677 (KR); KIM, Bonghee, Suwon-si Gyeonggi-do 16677 (KR); KIM, Jiwon, Suwon-si Gyeonggi-do 16677 (KR); YOO, Nagyeom, Suwon-si Gyeonggi-do 16677 (KR); LIM, Yujin, Suwon-si Gyeonggi-do 16677 (KR)
(74) Representative: Gulde & Partner
(86) International application number: PCT/KR2024/005025
(87) International publication number: WO 2024/242323

(57) **Abstract**

An electronic device, according to one embodiment, may comprise: a housing that includes a first housing and a second housing; a hinge unit that enables the first housing and the second housing to rotate; a first display that is disposed in the first housing and the second housing; at least one camera; at least one sensor; at least one processor; and a memory that stores instructions. The instructions may, when executed by the at least one processor, cause the electronic device to identify, by using the at least one sensor, whether the electronic device is in a folded state within a specified angular range. The instructions may, when executed by the at least one processor, cause the electronic device to identify whether an object is detected in an image acquired by means of the at least one camera. The instructions may, when executed by the at least one processor, cause the electronic device to activate an auto-framing function on the basis of the electronic device being in a folded state within a specified angular range and the object being detected in the image.

## Description

### [Technical Field]

The disclosure generally relates to a method for providing an auto-framing function and an electronic device supporting the same.

### [Background Art]

In line with development of in electronic technology, electronic devices including various types of flexible displays have been developed. For example, an electronic device including a flexible display may include a foldable display, a bendable display, or a rollable display.

An electronic device (e.g., an electronic device including a foldable display) may provide various functions not only in a fully folded state or a fully unfolded state but also in an intermediate state between the fully folded state and the fully unfolded state (hereinafter also simply referred to as "intermediate state"). For instance, the electronic device may provide a camera function (e.g., an auto-framing function) in the intermediate state and in a state in which the same is placed on an object (e.g., a desk or a cradle).

The auto-framing function may refer to a function wherein, during a video capture, in case that a subject (e.g., a person, an animal, or a car) is recognized within the camera's field-of-view area, an area within the image acquired through the camera is determined based on the position of the recognized subject within the field-of-view area (and the movement of the recognized subject), the area is cropped, and the cropped area is provided. For example, during a video capture, the electronic device may use the auto-framing function to perform zooming (e.g., zoom in or zoom out) with respect to the subject recognized within the camera's field-of-view area (e.g., around the recognized subject). The electronic device may accordingly ensure that the object corresponding to the recognized subject is enlarged (or reduced) and displayed at the center position of the image to be shown through the display, or moved to a position close to the center position and then displayed.

The above-described information may be provided as a related art intended to help the understanding of the disclosure. No assertion or determination is raised as to whether any of the above description is applicable as a prior art related to the disclosure.

### [Detailed Description of the Invention]

### [Technical Solution]

The electronic device may activate (e.g., execute) or deactivate (e.g., terminate) the auto-framing function, based on an input for selecting an object related to the auto-framing function within a menu provided by a camera application. For example, the electronic device may activate the auto-framing function, based on a user input on an icon displayed through the display to activate the auto-framing function. Alternatively, the electronic device may activate the auto-framing function, based on a user input on an icon for activating the auto-framing function through a quick panel. In such a case, there may be an inconvenience for the user to manually enter an input for activating (or deactivating) the auto-framing function into the electronic device.

Various embodiments of the disclosure relate to a method for providing an auto-framing function and an electronic device supporting the same, wherein in case that a specified condition is satisfied, the auto-framing function can be activated automatically (e.g., without a user input for activating the auto-framing function).

The technical subjects pursued in the disclosure are not limited to the above-mentioned technical subjects, and other technical subjects not mentioned herein will be clearly understood by those skilled in the art from the following description.

An electronic device according to an embodiment may include: a housing including a first housing and a second housing; a hinge portion configured to enable the first housing and the second housing to rotate; a first display disposed on the first housing and the second housing; at least one camera; at least one sensor; at least one processor; and memory storing instructions. The instructions, when executed by the at least one processor, may cause the electronic device to identify, through the at least one sensor, whether the electronic device is folded within a specified angle range. The instructions, when executed by the at least one processor, may cause the electronic device to identify whether an object is detected within an image acquired through the at least one camera. The instructions, when executed by the at least one processor, may cause the electronic device to activate an auto-framing function, based on the electronic device being folded within the specified angle range and the object being detected within the image.

A method for providing an auto-framing function in an electronic device according to an embodiment may include identifying, through at least one sensor of the electronic device, whether the electronic device is folded within a specified angle range. The method may include identifying whether an object is detected within an image acquired through the at least one camera of the electronic device. The method may include activating an auto-framing function, based on the electronic device being folded within the specified angle range and the object being detected within the image.

In an embodiment, in connection with a non-transitory computer-readable medium in which computer-executable instructions are recorded, the computer-executable instructions, when executed, may cause an electronic device including at least one processor to identify, through at least one sensor of the electronic device, whether the electronic device is folded within a specified angle range. The computer-executable instructions, when executed, may cause the electronic device to identify whether an object is detected within an image acquired through the at least one camera of the electronic device. The computer-executable instructions, when executed, may cause the electronic device to activate an auto-framing function, based on the electronic device being folded within the specified angle range and the object being detected within the image.

An electronic device according to an embodiment may include at least one camera, at least one sensor, at least one processor, and memory storing instructions. The instructions, when executed by the at least one processor, may cause the electronic device to identify, through the at least one sensor, whether the posture of the electronic device matches a specified posture. The instructions, when executed by the at least one processor, may cause the electronic device to identify whether an object is detected within an image acquired through the at least one camera. The instructions, when executed by the at least one processor, may cause the electronic device to activate an auto-framing function, based on the posture of the electronic device being identified as matching the specified posture and the object being detected within the image.

### [Brief Description of Drawings]

FIG. 1 is a block diagram of an electronic device in a network environment according to an embodiment.
FIG. 2 is a block diagram illustrating a camera module according to an embodiment.
FIG. 3A is a diagram illustrating an electronic device in an unfolded state according to an embodiment.
FIG. 3B is a diagram illustrating an electronic device in a folded state according to an embodiment.
FIG. 4 is a block diagram of an electronic device according to an embodiment.
FIG. 5 is a flowchart illustrating a method for providing an auto-framing function according to an embodiment.
FIG. 6 is a diagram illustrating a first mode and a second mode of an electronic device according to an embodiment.
FIG. 7 is a diagram illustrating a first mode and a second mode of an electronic device according to an embodiment.
FIG. 8 is a flowchart illustrating a method for providing an auto-framing function according to an embodiment.
FIG. 9 is a flowchart illustrating a method for providing an auto-framing function according to an embodiment.
FIG. 10 is a diagram illustrating a method for providing an auto-framing function according to an embodiment.
FIG. 11 is a flowchart illustrating a method for providing an auto-framing function according to an embodiment.
FIG. 12 is a flowchart illustrating a method for activating the auto-framing function while a camera function is being performed, according to an embodiment.
FIG. 13 is a diagram illustrating a method for activating the auto-framing function while a camera function is being performed, according to an embodiment.
FIG. 14 is a flowchart illustrating a method for deactivating the auto-framing function while the auto-framing function is being performed, according to an embodiment.
FIG. 15 is a flowchart illustrating a method for providing the auto-framing function according to an embodiment.
FIG. 16 is a flowchart illustrating a method for providing the auto-framing function according to an embodiment.
FIG. 17 is a flowchart illustrating a method for providing the auto-framing function according to an embodiment.

### [Mode for Carrying out the Invention]

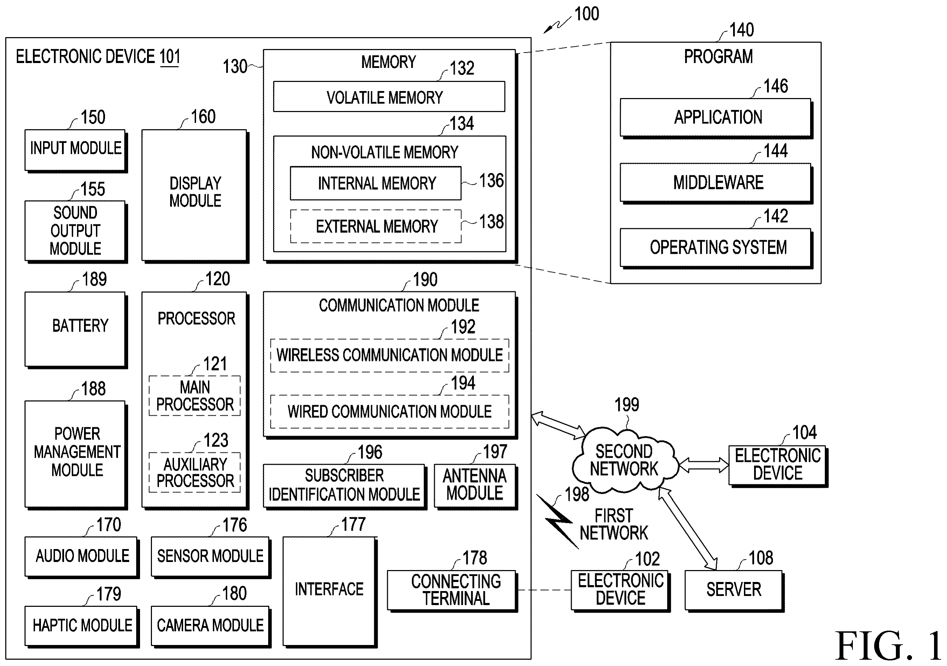

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

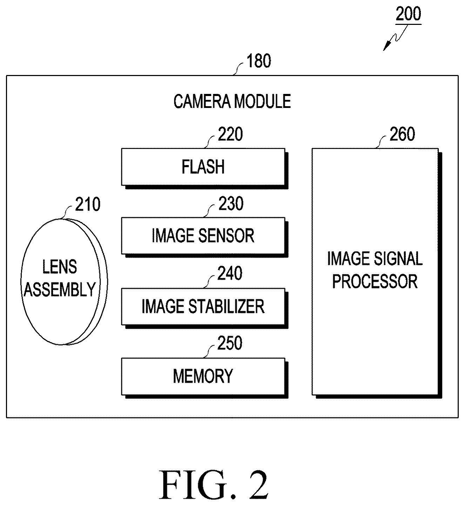

FIG. 2 is a block diagram 200 illustrating the camera module 180 according to various embodiments.

Referring to FIG. 2, the camera module 180 may include a lens assembly 210, a flash 220, an image sensor 230, an image stabilizer 240, a memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display device 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display device 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display device 260 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules180 may form a telephoto camera. Similarly, at least one of the plurality of camera modules 180 may form, for example, a front camera and at least another of the plurality of camera modules 180 may form a rear camera.

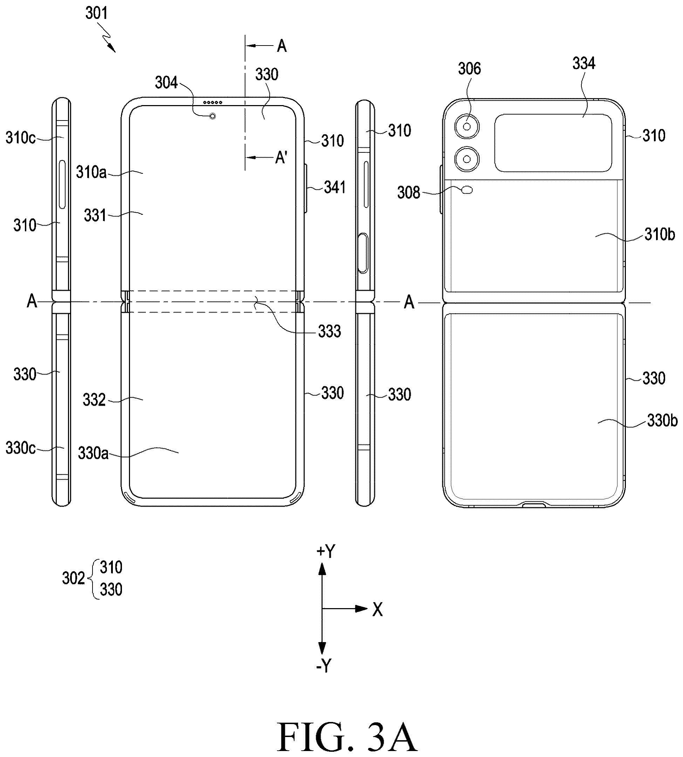

FIG. 3A is a diagram illustrating an electronic device in an unfolded state according to an embodiment.

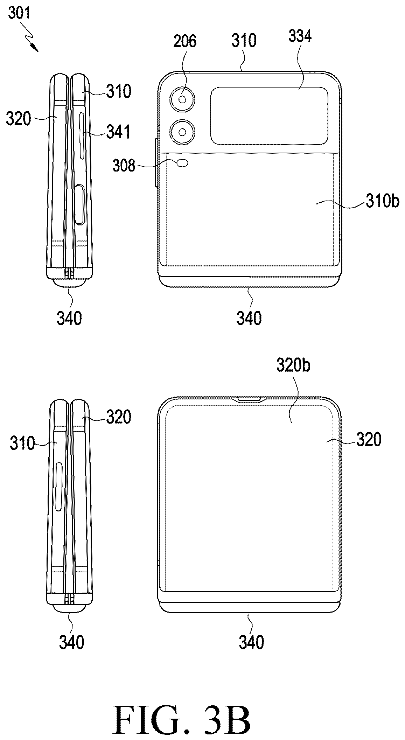

FIG. 3B is a diagram illustrating an electronic device in a folded state according to an embodiment.

Referring to FIG. 3A and FIG. 3B, the electronic device 301 may include a housing 302 and a flexible display (e.g., a front display 330) disposed within the space formed by the housing 302. According to an embodiment, the housing 302 may also be referred to as a foldable housing. According to an embodiment, the front display 330 may also be referred to as a foldable display.

According to an embodiment, the housing 302 may include a first housing 310 and a second housing 320 configured to rotate relative to the first housing 310.

According to an embodiment, the first housing 310 and/or the second housing 320 may form at least a part of the exterior of the electronic device 301. According to an embodiment, the surface where the front display 330 is visually exposed is defined as the front surface of the electronic device 301 and/or housing 302 (e.g., the first front surface 310a and the second front surface 320a). The surface opposite the front surface is defined as the rear surface of the electronic device 301 (e.g., the first rear surface 310b and the second rear surface 320b). The surface surrounding at least a part of the space between the front and rear surfaces is defined as the side surface of the electronic device 301 (e.g., the first side surface 310c and the second side surface 320c).

According to an embodiment, the first housing 310 may be rotatably connected to the second housing 320 by using a hinge structure (also referred to as a "hinge" or a "hinge portion"). For example, the first housing 310 and the second housing 320 may each be rotatably connected to the hinge structure. Accordingly, the electronic device 301 may transition to a fully folded state (e.g., FIG. 3b) or a fully unfolded state (e.g.,

FIG. 3a). In the fully folded state of the electronic device 301, the first front surface 310a may face the second front surface 320a, and in the fully unfolded state thereof, the direction in which the first front surface 310a is oriented may be substantially identical to the direction in which the second front surface 320a is oriented. For example, in the fully unfolded state, the first front surface 310a may be positioned substantially on the same plane as the second front surface 320a. According to an embodiment, the second housing 320 may provide a relative movement with respect to the first housing 310.

According to an embodiment, the first housing 310 and the second housing 320 may be disposed on both sides of a folding axis A and may be shaped to symmetrical with respect to the folding axis A as a whole. The angle between the first housing 310 and the second housing 320 (hereinafter also referred to as the "folding angle") may vary depending on whether the electronic device 301 is in a fully unfolded state, in a fully folded state, or in an intermediate state between the fully unfolded state and the fully folded state (hereinafter simply referred to as the "intermediate state").

According to an embodiment, the electronic device 301 may include a hinge cover 340. At least a part of the hinge cover 340 may be disposed between the first housing 310 and the second housing 320. According to an embodiment, depending on the state of the electronic device 301, the hinge cover 340 may be concealed by parts the first housing 310 and the second housing 320 or exposed to the outside of the electronic device 301. According to an embodiment, the hinge cover 340 may protect a hinge structure (not shown) from external impacts to the electronic device 301. According to an embodiment, the hinge cover 340 may be interpreted as a hinge housing for protecting the hinge structure.

According to an embodiment, in a fully unfolded state of the electronic device 301 as shown in FIG. 3A, the hinge cover 340 may be concealed by the first housing 310 and the second housing 320 and not exposed. As another example, in a folded state (e.g., a fully folded state) of the electronic device 301 as shown in FIG. 3B, the hinge cover 340 may be exposed to the outside between the first housing 310 and the second housing 320. As another example, in an intermediate state in which the first housing 310 and the second housing 320 are folded at a certain angle, the hinge cover 340 may be partially exposed to the outside between the first housing 310 and the second housing 320. However, the area exposed in this case may be less than that in the fully folded state. In an embodiment, the hinge cover 340 may include a curved surface.

In an embodiment, the front display 330 may be disposed on the first housing 310 (e.g., the first front surface 310a) and the second housing 320 (e.g., the second front surface 320a). For example, the front display 330 may be disposed, across the hinge portion, on the first housing 310 and the second housing 320.

According to an embodiment, the front display 330 may visually provide information to the outside (e.g., the user) of the electronic device 301. The front display 330 may include, for example, a hologram device or a projector and control circuitry for controlling the corresponding device. According to an embodiment, the front display 330 may include a touch sensor configured to detect a touch or a pressure sensor configured to measure the intensity of a force generated by the touch.

According to an embodiment, the front display 330 may be a display at least a partial area thereof can be deformed into a flat or curved surface. For example, the front display 330 may be configured to be vary in response to the relative movement of the second housing 320 with respect to the first housing 310. According to an embodiment, the front display 330 may include a folding area 333, a first display area 331 disposed on one side (e.g., in the upward (+Y direction)) with reference to the folding area 333, and a second display area 332 disposed on the other side (e.g., in the downward (-Y direction)). According to an embodiment, the folding area 333 may be positioned above the hinge structure. For example, at least a part of the folding area 333 may face the hinge structure. According to an embodiment, the first display area 331 may be disposed on the first housing 310, and the second display area 332 may be disposed on the second housing 320. According to an embodiment, the front display 330 may be accommodated in the first housing 310 and the second housing 320.

However, the division of areas of the front display 330 shown in FIG. 3A is exemplary, and the front display 330 may be divided into multiple (e.g., four or more, or two) areas depending on the structure or function.

In addition, although the areas of the front display 330 may be divided by the folding area 333 or folding axis (A-axis) extending parallel to the X-axis in the embodiment shown in FIG. 3A, the areas of the front display 330 may be divided with regard to a different folding area (e.g., a folding area parallel to the Y-axis) or a different folding axis (e.g., a folding axis parallel to the Y-axis). According to an embodiment, the front display 330 may be combined with or disposed adjacent to a touch sensing circuit, a pressure sensor capable of measuring the intensity (pressure) of a touch, and/or a digitizer configured to detect a magnetic field-type stylus pen.

According to an embodiment, the electronic device 301 may include a rear display 334. The rear display 334 may be disposed to be oriented in a different direction from the front display 330. For example, the front display 330 may be visually exposed through the front surface (e.g., the first front surface 310a and/or the second front surface 320a) of the electronic device 301, and the rear display 334 may be visually exposed through the rear surface (e.g., the first rear surface 310b) of the electronic device 301.

According to an embodiment, the electronic device 301 may include at least one camera module 304 and 306 and a flash 308. According to an embodiment, the electronic device 301 may include a front camera module 304 exposed through the front surface (e.g., the first front surface 310a) and/or a rear camera module 306 exposed through the rear surface (e.g., the first rear surface 310b). The camera modules 304 and 306 may include one or multiple lenses, an image sensor, a flash, and/or an image signal processor. The flash 308 may include a light-emitting diode or a xenon lamp. According to an embodiment, two or more lenses (e.g., an infrared camera, a wide-angle lens, and a telephoto lens) and image sensors may be disposed on one surface of the electronic device 301. The configuration of the front camera module 304 and/or the rear camera module 306 may be partially or entirely identical to the configuration of the camera module 180 in FIG. 1 and FIG. 2.

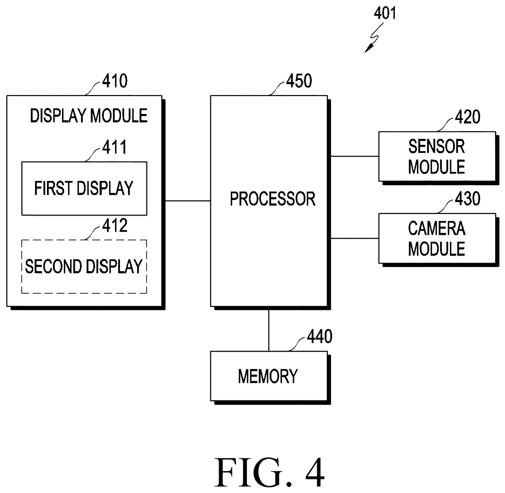

FIG. 4 is a block diagram of an electronic device 401 according to various embodiments.

Referring to FIG. 4, in an embodiment, the electronic device 401 may be the electronic device 101 in FIG. 1 or the electronic device 301 in FIG. 3A and FIG. 3B. For example, the electronic device 401 may be a foldable electronic device including the housing 202 (e.g., the first housing 210 and the second housing 220) and the hinge portion (hinge structure) described with reference to FIG. 3A and FIG. 3B.

In an embodiment, the electronic device 401 (301) may include a display module 410, a sensor module 420, a camera module 430, memory 440, and/or a processor 450.

In an embodiment, the display module 410 may be the display module 160 in FIG. 1.

In an embodiment, the display module 410 may include a first display 411 and a second display 412.

In an embodiment, the first display 411 may be disposed on the first housing (e.g., the first front surface 310a of the first housing 310) and the second housing (e.g., the second front surface 320a of the second housing 320). For example, the first display 411 may be visually exposed through the front surface (e.g., the first front surface 310a and/or the second front surface 320a) of the electronic device 401.

In an embodiment, the first display 411 may be a foldable display. For example, the first display 411 may be the front display 330 in FIG. 3A. For example, the first display 411 may be disposed, across the hinge portion, on the first housing and the second housing. For example, the first display 411 may be folded or unfolded as the first housing or the second housing rotates around the hinge portion. Hereinafter, examples of the first display 411 being folded or unfolded will be described, but are not limitative. For example, the first display 411 may be implemented in a bending (or curving) form, and examples where the first display 411 is implemented in a bending form may be applied in the same or similar manner as the examples where the first display 411 is folded or unfolded.

In an embodiment, the second display 412 may be disposed on the rear surface (e.g., the first rear surface 310b) of the first housing (e.g., the first housing 310). For example, the second display 412 may be visually exposed through the rear surface (e.g., the first rear surface 310b) of the electronic device 401.

In an embodiment, the second display 412 may be a non-foldable display. For example, the second display 412 may be the rear display 334 of FIGS. 3A and 3B.

In an embodiment, the electronic device 401 may not include the second display 412.

In an embodiment, the sensor module 420 may be the sensor module 176 in FIG. 1.

In an embodiment, the sensor module 420 may include a sensor for detecting the folded or unfolded state of the electronic device 401 (or the folding angle of the electronic device 401) (hereinafter referred to as the "first sensor"). For example, the first sensor may detect the folded or unfolded state of the electronic device 401 (or the folding angle formed by the first housing and the second housing). For example, the first sensor may include a Hall sensor disposed on one of the first housing and the second housing and a magnet disposed on the other housing. The Hall sensor may detect the folded or unfolded state of the electronic device 401, or the folding angle formed by the first housing and the second housing, by detecting changes in the electromagnetic field (or magnetic flux density) generated by the magnet when at least one of the first housing or the second housing rotates around the hinge portion. However, the first sensor is not limited to a Hall sensor (and magnet). For example, the first sensor may include at least one of a proximity sensor, an angle sensor, a load cell, an infrared sensor, a pressure sensor, an acceleration sensor, a gyro sensor, or an electromagnetic sensor capable of detecting the folded or unfolded state of the electronic device 401.

In an embodiment, the sensor module 420 may include a sensor capable of detecting the movement and/or posture of the electronic device 401 (hereinafter referred to as the "second sensor"). For example, the second sensor may include an inertial sensor (e.g., an acceleration sensor, a gyro sensor, a geomagnetic sensor). However, the second sensor is not limited to an inertial sensor.

In an embodiment, the camera module 430 may be the camera module 180 in FIG. 1 or FIG. 2.

In an embodiment, the camera module 430 may include one or more cameras.

In an embodiment, the camera module 430 may include at least one front camera and/or at least one rear camera.

In an embodiment, the at least one rear camera may include multiple cameras having different fields of view (e.g., different focal lengths). For example, the at least one rear camera may include a first camera configured to acquire images in a zoom magnification range equal to or higher than 1.0x and less than 3.0x (hereinafter referred to as the "first camera" or "wide-angle camera") and a second camera configured to acquire images in a zoom magnification range equal to or higher 0.5x than and less than 1.0x (hereinafter referred to as the "second camera" or "ultra-wide-angle camera"). However, the cameras included in the at least one rear camera are not limited to the first camera and the second camera. For example, the at least one rear camera may further include, in addition to the first camera and the second camera, at least one of a third camera configured to acquire images in a zoom magnification range equal to or higher than 3.0x and less than 5.0x or a fourth camera configured to acquire images in a zoom magnification range equal to or higher than 5.0x and less than 10.0x. In an embodiment, the first camera to the fourth camera may be cameras that support digital zoom, and at least one of the first camera to the fourth camera (e.g., the third camera) may be a camera that supports optical zoom (e.g., optical continuous zoom that acquires images by using light passing through a lens after moving the lens to a position corresponding to the zoom magnification) in addition to digital zoom.

In an embodiment, the memory 440 may be the memory 130 in FIG. 1.

In an embodiment, the memory 440 may store information for performing an operation to provide an auto-framing function.

In an embodiment, the processor 450 may be the processor 120 in FIG. 1.

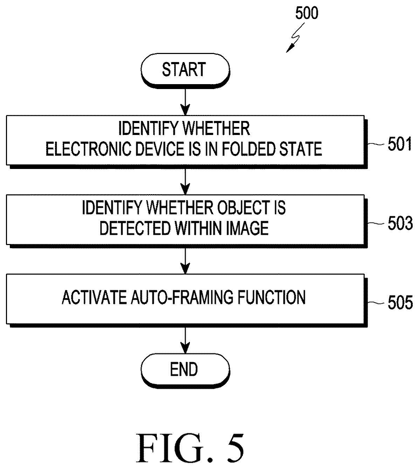

In an embodiment, the processor 450 may perform the overall operation to provide an auto-framing function. In an embodiment, the processor 450 may include one or more processors for performing the operation to provide an auto-framing function. The operation in which the processor 450 provides the auto-framing function will be described later in detail with reference to FIG. 5.

The electronic device 401 is shown in FIG. 4 as including a display module 410, a sensor module 420, a camera module 430, memory 440, and/or a processor 450, but is not limited thereto. For example, the electronic device 401 may further include at least one component (e.g., the communication module 190) shown in FIG. 1.

In the aforementioned examples, the electronic device 401 has been described as a foldable electronic device including a first housing 210 and a second housing 220 capable of rotating around one hinge portion, but is not limited thereto. For example, the electronic device 401 may be a foldable electronic device including three or more housings capable of rotating around two or more hinge portions.

FIG. 5 is a flowchart 500 illustrating a method for providing an auto-framing function according to an embodiment.

Referring to FIG. 5, in operation 501, in an embodiment, the processor 450 may identify, through the sensor module 420, whether the electronic device 401 is folded within a specified angle range. For example, the processor 450 may determine, with reference to the sensor module 420, whether the folded angle of the electronic device 401 falls in the specified angle range.

According to an embodiment, the processor 450 may execute a camera application, based on an input (e.g., a user input). The processor 450 may display the execution screen of the camera application with reference to the display module 410 (e.g., the first display 411 and/or the second display 412), based on the camera application being executed.

In an embodiment, the processor 450 may acquire an input (e.g., a user input) for executing a video function while the camera application is executed. The processor 450 may identify whether the electronic device 401 is folded within the specified angle range, based on the input for executing the video function.

In an embodiment, the identifying whether electronic device 401 is folded within the specified angle range may include identifying whether the electronic device 401 is operating in a specified mode.

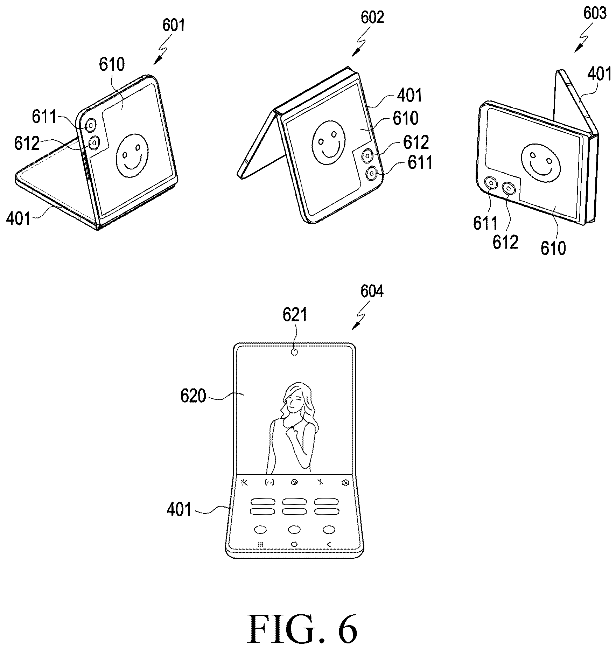

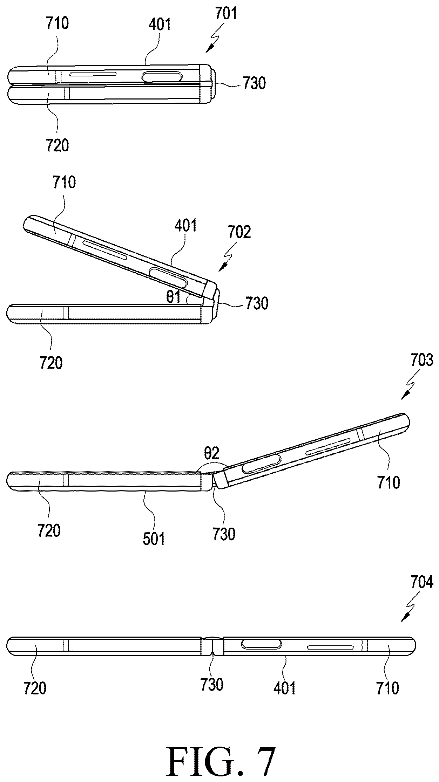

Hereinafter, the identifying whether the electronic device 401 is operating in a specified mode will be described with reference to FIG. 6 and FIG. 7.

FIG. 6 is a diagram illustrating a first mode and a second mode of the electronic device 401 according to an embodiment.

FIG. 7 is a diagram illustrating a first mode and a second mode of the electronic device 401 according to an embodiment.

Referring to FIG. 6 and FIG. 7, according to an embodiment, the first mode of the electronic device 401 (hereinafter referred to as the "first mode" or "tent mode") may refer to a mode in which, while the electronic device 401 is folded within a specified angle range, an image acquired through the camera module 430 is displayed through the second display 412. For example, in the first mode, as indicated by reference numeral 601, reference numeral 602, or reference numeral 603 in FIG. 6, an image acquired through the rear camera (e.g., at least one of the rear cameras 611 and 612) is displayed through the second display 610 while the electronic device 401 is folded at an angle falling in a specified angle range (e.g., an angle range from approximately 20 degrees to approximately 160 degrees).

In an embodiment, the processor 450 may execute a camera application, based on a user input, in a fully folded state of the electronic device 401. For example, the processor 450 may execute the camera application, based on an input to a physical key (e.g., the physical key 341 in FIG. 3A) disposed on a side surface of the electronic device 401 in a fully folded state of the electronic device 401. The processor 450 may display an image (e.g., a preview image) acquired through the rear cameras 611 and 612, based on the camera application being executed, through the second display 610. The processor 450 may acquire an input for executing a video function while displaying the image through the second display 610. The processor 450 can identify whether the electronic device 401 is operating in the first mode, based on acquiring the input for executing the video function.

In an embodiment, the second mode of the electronic device 401 (hereinafter referred to as the "second mode" or "flex mode") may refer to a mode in which, while the electronic device 401 is folded within a specified angle range, an image acquired through the camera module 430 is displayed through the first display 411. For example, in the second mode, as indicated by reference numeral 604 in FIG. 6, an image acquired through the front camera 621 (or the rear cameras 611 and 612) is displayed through the first display 620 while the electronic device 401 is folded at an angle falling in a specified angle range (e.g., an angle range from approximately 20 degrees to approximately 160 degrees).

According to an embodiment, the processor 450 may execute the camera application, based on a user input, while the electronic device 401 is fully unfolded (or folded within a specified angle range). For example, the processor 450 may execute the camera application while the electronic device 401 is fully unfolded. The processor 450 may display an image (e.g., a preview image) acquired through the front camera 621 (or the rear cameras 611 and 612), based on the camera application being executed, through the first display 620. The processor 450 may acquire an input for executing the video function while displaying the image through the first display 620. The processor 450 may identify whether the electronic device 401 is operating in the second mode, based on acquiring the input for executing the video function.

In an embodiment, the processor 450 may identify, through the sensor module 420, whether the electronic device 401 is folded within a specified angle range in order to identify whether the electronic device 401 is operating in the first mode or the second mode.

In an embodiment, reference numeral 701 in FIG. 7 may indicate a state in which the first housing 710 of the electronic device 401 and the second housing 720 of the electronic device 401 are fully folded. The state in which the first housing 710 and the second housing 720 of the electronic device 401 are fully folded may be a state in which the angle formed by the first housing 710 and the second housing 720 (hereinafter also referred to as the "folding angle") is approximately 0 degree. Reference numeral 702 in FIG. 7 may indicate a state in which the folding angle (θ₁) formed by the first housing 710 and the second housing 720 of the electronic device 401 is approximately 20 degrees as the first housing 710 of the electronic device 401 rotates around the hinge portion 730. Reference numeral 703 in FIG. 7 may indicate a state in which the folding angle (θ₂) formed by the first housing 710 and the second housing 720 of the electronic device 401 is approximately 160 degrees as the first housing 710 of the electronic device 401 further rotates around the hinge portion. Reference numeral 704 in FIG. 7 may indicate a state in which the first housing 710 of the electronic device 401 and the second housing 720 of the electronic device 401 are fully unfolded. The state in which the first housing 710 and the second housing 720 of the electronic device 401 are fully unfolded may be a state in which the folding angle formed by the first housing 710 and the second housing 720 is approximately 180 degrees.

In an embodiment, the processor 450 may configure multiple states of the electronic device 401. For example, the processor 450 may configure a state in which the first housing 710 and the second housing 720 of the electronic device 401 are fully folded, as indicated by reference numeral 701, as a first state, and may configure a state between the first state and a state in which the folding angle is approximately 20 degrees, as indicated by reference numeral 702, as a second state. The processor 450 may configure a state between the state in which the folding angle is approximately 20 degrees, as indicated by reference numeral 702, and a state in which the folding angle is approximately 160 degrees, as indicated by reference numeral 703, as a third state. The processor 450 may configure a state between the state in which the folding angle is approximately 160 degrees, as indicated by reference numeral 703, and a state in which the first housing 710 and the second housing 720 of the electronic device 401 are fully unfolded, as indicated by reference numeral 704, as a fourth state, and may configure a state in which the first housing 710 and the second housing 720 of the electronic device 401 are fully unfolded as a fifth state.

In an embodiment, a folded state in a specified angle range may be the third state. FIG. 7 illustrates approximately 20 degrees and approximately 160 degrees as exemplary folding angles serving as criteria for distinguishing the states, but is not limited thereto. For example, the folding angles serving as criteria for distinguishing the states may be configured differently depending on the type of the electronic device 401 (e.g., the direction in which the electronic device 401 is folded) and/or characteristics thereof.

In an embodiment, the processor 450 (e.g., a sensor hub processor) may detect the folding angle through the sensor module 420. For example, the sensor module 420 (e.g., the first sensor) may include a Hall sensor disposed on one of the first housing 710 and the second housing 720, and a magnet disposed on the other housing. The Hall sensor may transfer a signal indicating a change in the electromagnetic field (or magnetic flux density) generated by the magnet, if at least one of the first housing 710 or the second housing 720 rotates around the hinge portion 730, to the processor 450 (e.g., a sensor hub processor). The processor 450 (e.g., a sensor hub processor) may detect the folding angle, based on the signal received from the Hall sensor. The processor 450 (e.g., a sensor hub processor) may identify the state of the electronic device 401 (e.g., one of the first state to the fifth state), based on the folding angle. The processor 450 (e.g., a sensor hub processor) may transfer information indicating the identified state to the processor 450 (e.g., an application processor). The processor 450 (e.g., an application processor) may identify, based on the information, whether the electronic device 401 is folded state in a specified angle range.

The aforementioned example assumes that the folding angle is detected by using a Hall sensor (and a magnet), but is not limitative. For example, the processor 450 may detect the folding angle by using at least one of a proximity sensor, an angle sensor, a load cell, an infrared sensor, a pressure sensor, an acceleration sensor, a gyro sensor, or an electromagnetic sensor.

Although it has been assumed in the description made with reference to FIG. 6 and FIG. 7 that the operation of identifying whether the electronic device 401 is folded within a specified angle range includes an operation of identifying whether the electronic device 401 is operating in a specified mode (e.g., a first mode or a second mode), the assumption is not limitative. For example, the operation of identifying whether the electronic device 401 is folded within a specified angle range may include an operation of identifying whether the electronic device 401 is operating in a mode (e.g., a dual display mode) in which the electronic device 401 displays an image acquired through the camera module 430 through the first display 411 and the second display 412 while the electronic device 401 is folded within the specified angle range. For example, the operation of identifying whether the electronic device 401 is folded within a specified angle range may include an operation of identifying whether the electronic device 401 is folded within the specified angle range while the camera function is executed by the electronic device 401 (e.g., while a preview image acquired through the camera module 430 is displayed through the first display 411 and/or the second display 412).

Referring to FIG. 5, in operation 503, in an embodiment, the processor 450 may identify whether an object is detected within an image acquired through the camera module 430.

In an embodiment, the processor 450 may acquire an image through a camera (e.g., a wide-angle camera) configured by default when the camera application is executed. The processor 450 may identify whether an object is detected within the acquired image, based on the acquired image.

In an embodiment, the auto-framing function may be a function wherein, in case that a specified subject (e.g., a subject of a specified type) is recognized within the field-of-view area of the camera while the camera function is being executed, an area determined based on the position of the recognized subject within the field-of-view area (and the movement of the recognized subject), within the image acquired through the camera, is cropped, and the cropped area is displayed through the display module 410.

In an embodiment, the auto-framing function may be a function of acquiring an image obtained by zooming (e.g., zooming in or zooming out) on a subject recognized in the field-of-view area of the camera (e.g., around the recognized subject). For example, the auto-framing function may operate as follows: an area of an image acquired through the camera is cropped such that an object corresponding to the recognized subject is displayed at the center position of the image to be displayed through the display, or is moved to a position close to the center position and displayed therein, and the cropped area is then displayed through the display module 410. For example, the auto-framing function may operate as follows: in case that a first subject is located within the field-of-view area of the camera while the auto-framing function is executed, and in case that a second subject moves from outside the field-of-view area of the camera into the field-of-view area of the camera and is located therein, an area of an image acquired through the camera is cropped such that a first object corresponding to the first subject and a second object corresponding to the second subject are displayed at the center position of the image to be displayed through the display, or are moved to positions close to the center position and displayed therein, and the cropped area is then displayed through the display module 410.

In an embodiment, the processor 450 may specify (e.g., configure) a subject that is the target of a recognition operation while the auto-framing function is being executed. For example, the processor 450 may specify (e.g., configure) at least one of a person, an animal (e.g., a dog, a cat), or a subject (e.g., a car) moving within the field-of-view area of the camera as the subject (e.g., the type of the subject) that is the target of a recognition operation while the auto-framing function is being executed.

In an embodiment, the processor 450 may identify whether an object corresponding to the specified subject (hereinafter referred to as the "specified object") is detected within the acquired image (e.g., whether an object of a specified type is detected within the acquired image).

In an embodiment, the operation of identifying whether an object is detected within an image acquired through the camera may include an operation of identifying whether a specified object is detected within the image acquired through the camera. However, the operation of identifying whether a specified object is detected within the image acquired through the camera is not limited to the aforementioned examples. For example, in case that a person performing a specific gesture is recognized within the field-of-view area of the camera, the processor 450 may identify that an object (e.g., an object corresponding to the recognized person) is detected within the acquired image. For example, in case that the user's input for selecting an object (e.g., an object touching input) is acquired within the acquired image, the processor 450 may identify that an object (e.g., the selected object) is detected within the acquired image.

In an embodiment, the processor 450 may identify whether an object is detected within an image acquired through the camera module 430 by using an algorithm for recognizing an object or an artificial intelligence model for recognizing an object.

In FIG. 5, operation 501 is shown as being performed before operation 503, but this is not limitative. For example, the processor 450 may perform operation 503 before operation 501 or may perform operations 501 and 507 simultaneously (e.g., in parallel).

In operation 505, in an embodiment, the processor 450 may activate the auto-framing function, based on the electronic device 401 being folded within a specified angle range, and an object being detected within an image acquired through the camera module 430. For example, the processor 450 may execute the auto-framing function, based on identifying in operation 501 that the electronic device 401 is folded within the specified angle range, and identifying in operation 503 that an object is detected within the image acquired through the camera module 430. For example, the processor 450 may not execute the auto-framing function (e.g., may maintain the auto-framing function deactivated), based on identifying in operation 501 that the electronic device 401 is not folded within the specified angle range, or identifying in operation 503 that no object is detected within the image acquired through the camera module 430.

In an embodiment, in case that auto-framing is activated, the processor 450 may perform a camera function by using the auto-framing function. For example, the processor 450 may acquire an image having the auto-framing function applied thereto (e.g., a video having the auto-framing function applied thereto) and may display the acquired image through the display module 410. The processor 450 may store the acquired image in the memory 440 if the video function is terminated.

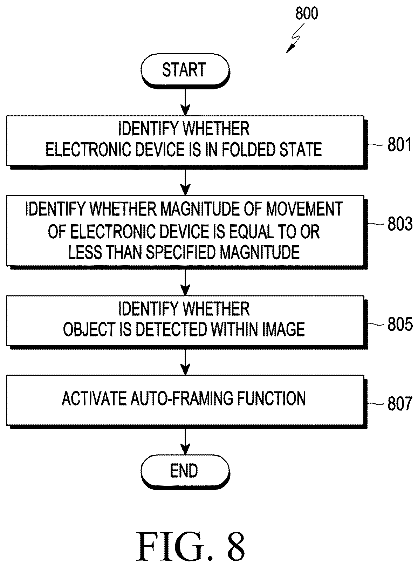

FIG. 8 is a flowchart 800 illustrating a method for providing an auto-framing function according to an embodiment.

Referring to FIG. 8, in operation 801, in an embodiment, the processor 450 may identify, through the sensor module 420, whether the electronic device 401 is folded within a specified angle range.

Operation 801 is at least partially identical or similar to operation 501 in FIG. 5, detailed descriptions thereof will be omitted herein.

In operation 803, in an embodiment, the processor 450 may identify, through the sensor module 420, whether the magnitude of movement of the electronic device 401 is equal to or less than a specified magnitude (e.g., a threshold magnitude).

In an embodiment, the processor 450 may acquire information regarding the movement of the electronic device 401 (e.g., the magnitude of movement of the electronic device 401) through an inertial sensor (e.g., an acceleration sensor). The processor 450 may identify whether the magnitude of movement of the electronic device 401 is equal to or less than a specified magnitude (e.g., a threshold magnitude) by comparing the acquired magnitude of movement of the electronic device 401 with the specified magnitude.

In an embodiment, the operation of identifying whether the magnitude of movement of the electronic device 401 is equal to or less than a specified magnitude may include an operation of identifying whether the electronic device 401 is substantially stationary. For example, the operation of identifying whether the magnitude of movement of the electronic device 401 is equal to or less than a specified magnitude may include an operation of identifying whether a value indicating the magnitude of movement of the electronic device 401 is substantially the same as a value indicating that the same is substantially stationary.

In an embodiment, in case that the magnitude of movement of the electronic device 401 is equal to or less than the specified magnitude may correspond to a case in which the electronic device 401 is substantially stationary (e.g., in a fixed state), such as a state in which the electronic device 401 is placed on an object such as a desk surface or cradled on an object (e.g., on a fixed cradle).

In operation 805, in an embodiment, the processor 450 may identify whether an object is detected within an image acquired through the camera module 430.

Operation 805 is at least partially identical or similar to operation 503 in FIG. 5, detailed descriptions thereof will be omitted herein.

In operation 807, in an embodiment, the processor 450 may activate an auto-framing function, based on the electronic device 401 being folded within a specified angle range, the magnitude of movement of the electronic device 401 being equal to or less than a specified magnitude, and an object being detected within an image acquired through the camera module 430. For example, the processor 450 may execute the auto-framing function, based on identifying in operation 801 that the electronic device 401 is folded within the specified angle range, identifying in operation 803 that the magnitude of movement of the electronic device 401 is equal to or less than the specified magnitude, and identifying in operation 805 that an object is detected within the image acquired through the camera module 430. For example, the processor 450 may not execute the auto-framing function (e.g., may maintain the auto-framing function deactivated), based on identifying in operation 801 that the electronic device 401 is not folded within the specified angle range, or identifying in operation 803 that the magnitude of movement of the electronic device 401 exceeds the specified magnitude, and identifying in operation 805 that no object is detected within the image acquired through the camera module 430.

In an embodiment, the processor 450 may deactivate a hand-shake correction function in case that the auto-framing function is activated (or based on the electronic device 401 being folded within a specified angle range, the magnitude of movement of the electronic device 401 being equal to or less than a specified magnitude, and an object being detected within an image acquired through the camera module 430). For example, in case that the auto-framing function is activated, the processor 450 may turn off the optical image stabilization (OIS) function, the digital image stabilizer (DIS) function, and/or the electronic image stabilizer (EIS) function. The electronic device 401 may accordingly deactivate the hand-shake correction function while the electronic device 401 is substantially stationary, thereby reducing unnecessary power consumption.

In an embodiment, the processor 450 may perform a camera function in case that the auto-framing function is activated, or by using the auto-framing function. For example, the processor 450 may acquire an image having the auto-framing function applied thereto (e.g., a video having the auto-framing function applied thereto) and may display the acquired image through the display module 410. The processor 450 may store the acquired image in the memory 440 if the video function is terminated.

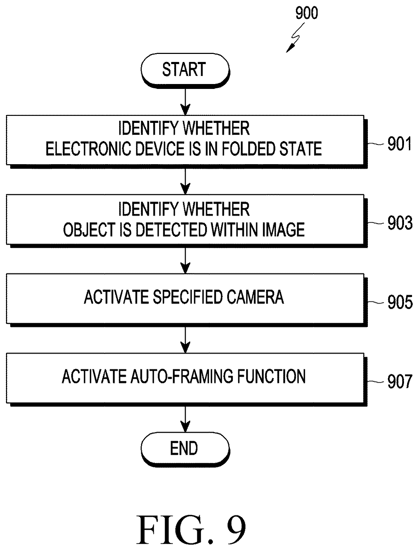

FIG. 9 is a flowchart 900 illustrating a method for providing an auto-framing function according to an embodiment.

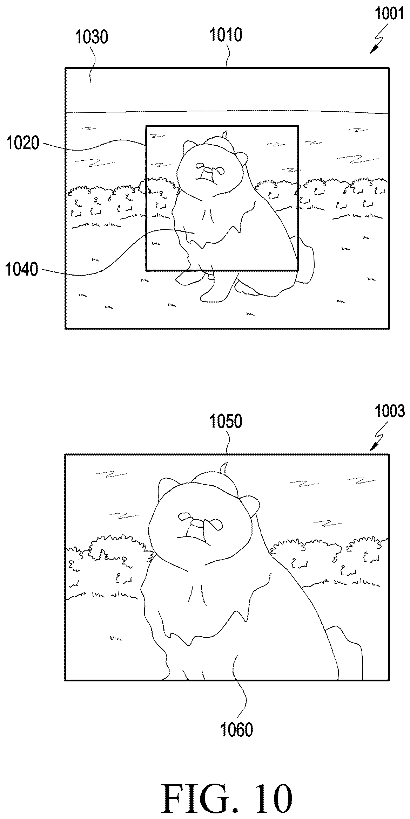

FIG. 10 is a diagram illustrating a method for providing an auto-framing function according to an embodiment.

Referring to FIG. 9 and FIG. 10, in operation 901, in an embodiment, the processor 450 may identify, through the sensor module 420, whether the electronic device 401 is folded within a specified angle range.

Operation 901 is at least partially identical or similar to operation 501 in FIG. 5, detailed descriptions thereof will be omitted herein.

In operation 903, in an embodiment, the processor 450 may identify whether an object is detected within an image acquired through the camera module 430.

Operation 903 is at least partially identical or similar to operation 503 in FIG. 5, detailed descriptions thereof will be omitted herein.

In operation 905, in an embodiment, the processor 450 may activate a camera specified for the auto-framing function, based on the electronic device 401 being folded at a specified angle, and an object being detected within an image acquired through the camera module 430.

In an embodiment, the electronic device 401 may include a first camera (a wide-angle camera) and a second camera (an ultra-wide-angle camera). The size of the field-of-view area of the second camera may be larger than the size of the field-of-view area of view of the first camera. For example, referring to reference numeral 1001 in FIG. 10, reference numeral 1010 may indicate the field-of-view area of the second camera, and reference numeral 1020 may indicate the field-of-view area of the first camera. As indicated by reference numeral 1001, the size of the field-of-view area 1010 of the second camera may be larger than the size of the field-of-view area 1020 of the first camera such that the second camera can acquire an image regarding a wider field-of-view area (or scene) compared to the first camera. For example, compared to the field-of-view area 1020 of the first camera, the field-of-view area 1010 of the second camera may further include a margin area 1030 (e.g., an area included in the field-of-view area 1010 of the second camera but not included in the field-of-view area 1020 of the first camera).

In an embodiment, the camera specified for the auto-framing function may be the camera having the largest field of view among multiple cameras disposed on the same surface of the electronic device 401 as the currently activated camera. For example, the electronic device 401 of the processor 450 may include a front camera and a rear camera including a first camera and a second camera. The processor 450 may activate the second camera as the camera specified for the auto-framing function, based on the electronic device 401 being folded at a specified angle, and an object being detected within an image acquired through the camera module 430, while acquiring a preview image through the first camera.

In an embodiment, the operation of activating the camera specified for the auto-framing function may include an operation of switching the camera for image acquisition to the camera specified for the auto-framing function. For example, in case that an image is being acquired through the first camera, the processor 450 may switch the camera for image acquisition from the first camera to the second camera (e.g., deactivate the first camera and activate the second camera), based on the electronic device 401 being folded at a specified angle, and an object being detected within an image acquired through the camera module 430. For example, in case that an image is being acquired through the second camera (or in case that the second camera is activated), the processor 450 may maintain the second camera as the camera for image acquisition, based on the electronic device 401 being folded at a specified angle, and an object being detected within an image acquired through the camera module 430.

In operation 907, in an embodiment, the processor 450 may activate the auto-framing function, based on the electronic device 401 being folded within a specified angle range, and an object being detected within an image acquired through the camera module 430.

In an embodiment, in case that the second camera is activated as the camera specified for the auto-framing function, the processor 450 may perform the auto-framing function, based on an image acquired through the second camera. For example, the processor 450 may use the second camera to acquire an image corresponding to the field-of-view area 1010 of the second camera. The processor 450 may crop an area obtained by zooming (e.g., zooming in) on the object 1060 corresponding to the subject 1040 within the image corresponding to the field-of-view area 1010 of the second camera, as indicated by reference numerals 1001 and 1003, and may display the cropped area (e.g., the image 1050) through the display module 410.

Although examples where the electronic device 401 includes multiple cameras have been described with reference to FIG. 9 and FIG. 10, this is not limitative. For example, the electronic device 401 may include a single camera (e.g., the first camera). In such a case, the processor 450 may perform the operations described with reference to FIG. 9 and FIG. 10 by using the single camera. For example, the processor 450 may identify, through the sensor module 420, whether the electronic device 401 is folded within a specified angle range. The processor 450 may identify whether an object is detected within an image acquired through the single camera. The processor 450 may activate the auto-framing function, based on the electronic device 401 being folded within the specified angle range, and an object being detected within the image acquired through the single camera.

Although not shown in FIG. 9, the processor 450 may further perform an operation of identifying, with reference to the sensor module 420, whether the magnitude of movement of the electronic device 401 is equal to or less than a specified magnitude, as described with reference to operation 803 in FIG. 8. In such a case, the processor 450 may activate the camera specified for the auto-framing function, based on the electronic device 401 being folded at a specified angle, the magnitude of movement of the electronic device 401 being equal to or less than the specified magnitude, and an object being detected within an image acquired through the camera module 430. The processor 450 may perform the auto-framing function, based on an image acquired through the specified camera, in case that the specified camera is activated.

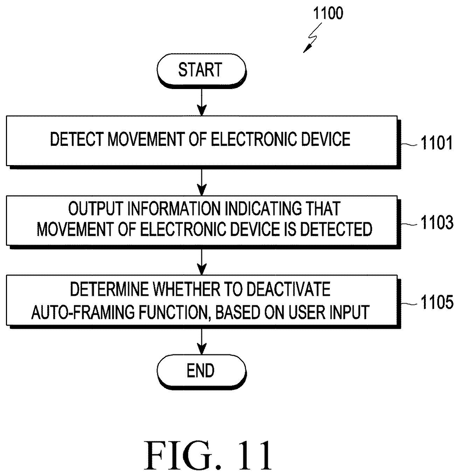

FIG. 11 is a flowchart 1100 illustrating a method for providing an auto-framing function according to an embodiment.

Referring to FIG. 11, in operation 1101, in an embodiment, the processor 450 may detect the movement of the electronic device 401 through the sensor module 420 while the auto-framing function is being performed (e.g., after the auto-framing function is activated).

In an embodiment, the processor 450 may identify whether a movement of the electronic device 401 having a size larger than a specified size (e.g., a threshold size) is detected, through the sensor module 420, while acquiring (e.g., generating) an image (e.g., a video) by using the auto-framing function, based on an image acquired through the camera module 430.

In operation 1103, the processor 450 may output information (e.g., a notification) indicating that a movement of the electronic device 401 has been detected. For example, in case that a movement of the electronic device 401 having a size larger than the specified size is detected, the processor 450 may display, through the display module 410, information indicating that a movement of the electronic device 401 having a size larger than the specified size is detected. For example, in case that a movement of the electronic device 401 having a size larger than the specified size is detected, the processor 450 may output, through a speaker, audio information indicating that a movement of the electronic device 401 having a size larger than the specified size is detected. For example, in case that a movement of the electronic device 401 having a size larger than the specified size is detected, the processor 450 may transmit, through the communication module of the electronic device 401, information indicating that a movement of the electronic device 401 having a size larger than the specified size is detected, to an external electronic device (e.g., an external electronic device connected to the electronic device 401 in a wired or wireless manner), such that the external electronic device outputs the information.

In operation 1105, in an embodiment, the processor 450 may determine whether to deactivate the auto-framing function, based on user input.

In an embodiment, the processor 450 may acquire an input from the user for selecting whether to activate the auto-framing function (e.g., maintain the activated auto-framing function) or deactivate the same, after information indicating that a movement of the electronic device 401 has been detected is output.

In an embodiment, the processor 450 may deactivate the auto-framing function, based on acquiring a user input for deactivating the auto-framing function. For example, in case that a user input for deactivating the auto-framing function is acquired, the processor 450 may output information indicating that the auto-framing function will be deactivated. The processor 450 may deactivate the auto-framing function before, after, or simultaneously with outputting the information indicating that the auto-framing function will be disabled. In an embodiment, the user input for deactivating the auto-framing function may include a user input entered into the electronic device 401, or a user input entered into the external electronic device when information indicating that a movement of the electronic device 401 is detected is output through the external electronic device.

In an embodiment, while the auto-framing function is being performed, a movement of the electronic device 401 may occur regardless of the user's intent. For example, the auto-framing function may be performed while the electronic device 401 is placed on an object (e.g., a desk). In case that the object or the electronic device 401 temporarily collides with a person (or an object) while the auto-framing function is being performed, a movement of the electronic device 401 may occur.

In an embodiment, while the auto-framing function is being performed, a movement of the electronic device 401 may occur according to the user's intent. For example, in case that the auto-framing function is performed while the electronic device 401 is placed on an object (e.g., a desk), and in case that the user picks up the electronic device 401 by hand in order to continuously perform the camera function (e.g., video function) while holding the electronic device 401, a movement of the electronic device 401 may occur.

In an embodiment, the processor 450 may output information indicating that a movement of the electronic device 401 is detected and may determine whether to deactivate the auto-framing function, based on a user input, thereby reflecting the user's intent related to the movement of the electronic device 401.

Although not shown in FIG. 11, in an embodiment, the processor 450 may identify, through the sensor module 420, whether a movement of the electronic device 401 having a size larger than a specified size (e.g., threshold size) is detected for a specified time (e.g., longer than the specified time) while the auto-framing function is being performed. The processor 450 may deactivate the auto-framing function, based on detecting a movement of the electronic device 401 having a size larger than the specified size for the specified time. For example, the processor 450 may deactivate the auto-framing function without performing an operation of outputting information indicating that a movement of the electronic device 401 is detected and/or an operation of acquiring a user input for deactivating the auto-framing function when a movement, in case that a movement of the electronic device 401 having a size larger than the specified size is detected for the specified time. The processor 450 may maintain the activation of the auto-framing function in case that the time of detection of the movement of the electronic device 401 having a size larger than the specified size is less than the specified time.

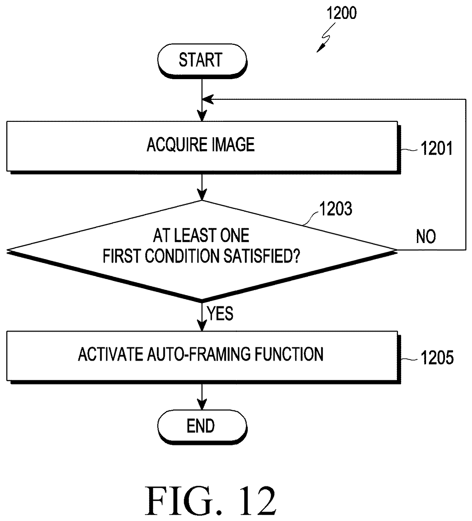

FIG. 12 is a flowchart 1200 illustrating a method for activating the auto-framing function while the camera function is being performed, according to an embodiment.

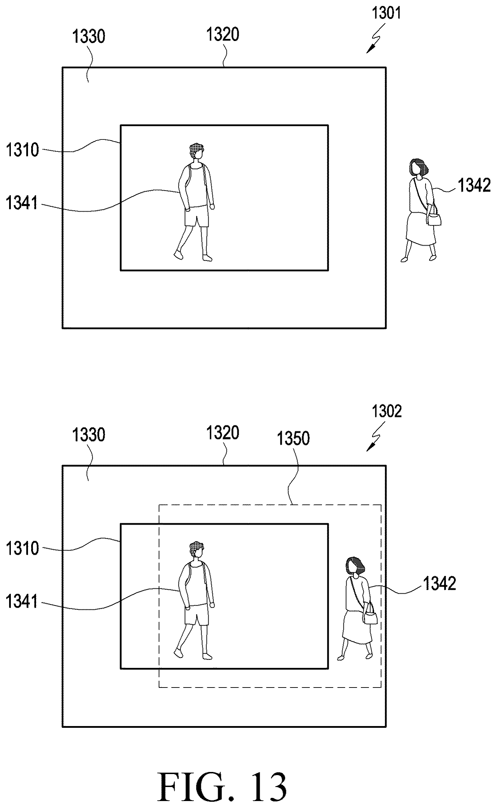

FIG. 13 is a diagram illustrating a method for activating the auto-framing function while the camera function is being performed, according to an embodiment.

Referring to FIG. 12 and FIG. 13, in operation 1201, in an embodiment, the processor 450 may acquire an image through the camera module 430. For example, the processor 450 may perform an operation of acquiring an image (e.g., a video) through the camera module 430 while the auto-framing function is deactivated.

In operation 1203, in an embodiment, the processor 450 may identify whether at least one first condition specified to activate the auto-framing function (hereinafter also simply referred to as "at least one first condition") is satisfied while an image (e.g., a video) is being acquired.

In an embodiment, the processor 450 may identify that at least one first condition is satisfied in case that a second subject (e.g., a specified second subject) is newly recognized within the field-of-view area of the camera module 430 while a first subject (e.g., a specified type of first subject) is recognized. For example, referring to reference numerals 1301 and 1302 in FIG. 13, reference numeral 1310 may indicate the field-of-view area of the first camera, reference numeral 1320 may indicate the field-of-view area of the second camera, and reference numeral 1330 may indicate a margin area (an area included in the field-of-view area 1320 of the second camera but not included in the field-of-view area 1310 of the first camera).

In an embodiment, as indicated by reference numeral 1301, at a first point in time, the first person 1341 may be located within the field-of-view area 1310 of the first camera, and the second person 1342 may be located outside the field-of-view area 1320 of the second camera.

In an embodiment, the processor 450 may recognize the first person 1341 (e.g., the full body of the first person 1341) located within the field-of-view area 1310 of the first camera, based on an image acquired through the first camera at the first point in time.

In an embodiment, as indicated by reference numeral 1302, at a second point in time after the first point in time, the first person 1341 may be located within the field-of-view area 1310 of the first camera, and the second person 1342 may be located within the field-of-view area 1320 of the second camera by moving.

In an embodiment, the processor 450 may identify that the first condition is satisfied in case that, at the second point in time, the second person 1342 is newly recognized within the field-of-view area 1320 of the second camera (or the field-of-view area 1310 of the first camera) while the first person 1341 (e.g., the full body of the first person 1341) is recognized.

However, the at least one first condition is, in an embodiment, not limited to a case where a second subject is newly recognized within the field-of-view area of the camera module 430 while a first subject is recognized. For example, the at least one first condition may include a condition in which the utterance of a second subject (e.g., a second person) located in the field-of-view area of the camera module 430 is detected in a state in which a first subject (e.g., a first person) is recognized, based on an image acquired through the camera module 430. For example, the at least one first condition may a condition in which, in a state in which a first subject (e.g., a first person) is recognized based on an image acquired through the camera module 430, the gaze of the first subject is detected as being directed toward a second subject (e.g., a second person) located in the field-of-view area of the camera module 430. For example, the at least one first condition may include a condition in which, in a state in which a first subject (e.g., a first person) is recognized based on an image acquired through the camera module 430, a movement of the first subject is detected within the field-of-view area of the camera module 430 (e.g., a movement of the first subject moving within the field-of-view area of the camera module 430). For example, the at least one first condition may include a condition in which, in a state in which a first subject (e.g., a first person) is recognized based on an image acquired through the camera module 430, the first subject performs a specified motion (e.g., a dancing motion).

In an embodiment, in case that at least one first condition for activating the auto-framing function includes multiple first conditions, and in case that one or more of the multiple first conditions are satisfied, the processor 450 may identify that at least one first condition is satisfied.

In operation 1205, in an embodiment, the processor 450 may activate the auto-framing function in case that at least one first condition is satisfied in operation 1203.

In an embodiment, the processor 450 may continuously perform operation 1201 in case that least one first condition is not satisfied in operation 1203.

In an embodiment, the processor 450 may activate the camera specified for the auto-framing function in case that at least one first condition is satisfied. For example, the processor 450 may switch the image acquisition camera from the first camera to the second camera in case that at least one first condition is satisfied.

In an embodiment, the processor 450 may perform the auto-framing function, based on an image acquired through the specified camera. For example, the processor 450 may zoom on the first person 1341 and the second person 1342 recognized in the field-of-view area 1320 of the second camera, referring to reference numeral 1302, such that the area corresponding to a part 1350 of the field-of-view area 1320 of the second camera is cropped, and the cropped area is displayed through the display.

In an embodiment, the processor 450 may activate the auto-framing function in case that at least one first condition is satisfied, and in case that the electronic device 401 is folded within a specified angle range.

In an embodiment, the processor 450 may activate the auto-framing function in case that at least one first condition is satisfied, in case that the electronic device 401 is folded within a specified angle range. and in case that the magnitude of movement of the electronic device 401 is less than or equal to a specified size.

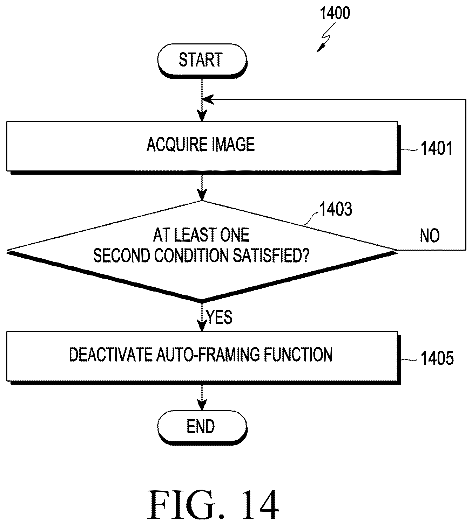

FIG. 14 is a flowchart 1400 illustrating a method for deactivating the auto-framing function while the auto-framing function is being performed, according to an embodiment.

Referring to FIG. 14, in operation 1401, in an embodiment, the processor 450 may acquire an image through the camera module 430. For example, the processor 450 may acquire an image (e.g., a video) through the camera module 430 while the auto-framing function is activated (e.g., while the auto-framing function is being performed).

In operation 1403, in an embodiment, the processor 450 may identify whether at least one second condition for deactivating the auto-framing function (hereinafter also simply referred to as "at least one second condition") is satisfied while an image is being acquired.

In an embodiment, the at least one second condition may include at least one of the following: a condition in which a movement of the electronic device 401 having a size larger than a specified size is detected; a condition in which the electronic device 401 is switched from a state in which the electronic device 401 is folded within a specified angle range to another state (e.g., a fully folded state (first state), a state (second state) between the fully folded state and a state having a folding angle of approximately 20 degrees, a fully unfolded state (fifth state), or a state (fourth state) between the fully folded state and a state having a folding angle of approximately 160 degrees); a condition in which a recognized subject moves outside the field-of-view area of the camera module 430 (e.g., the field-of-view area of the second camera) and a specified time has elapsed (e.g., a condition in which the recognized subject is not recognized within the field-of-view area of the camera module 430 for a specified time); or a condition in which a value indicating the degree of movement of the recognized subject (e.g., the speed of movement of the subject) exceeds a threshold value at which subject recognition is possible (or a threshold value at which subject tracking is possible).

In an embodiment, the processor 450 may identify that at least one second condition is satisfied in case that at least one second condition for deactivating the auto-framing function includes multiple second conditions, and in case that one or more of the multiple second conditions are satisfied.

In operation 1405, in an embodiment, the processor 450 may deactivate the auto-framing function in case that at least one second condition is satisfied in operation 1403.

In an embodiment, the processor 450 may continuously perform operation 1401 in case that at least one second condition is not satisfied in operation 1403.

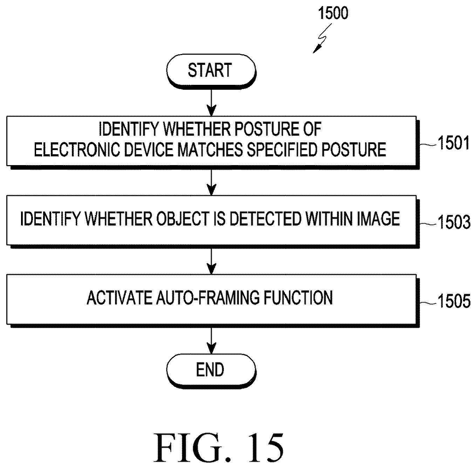

FIG. 15 is a flowchart 1500 illustrating a method for providing the auto-framing function according to an embodiment.

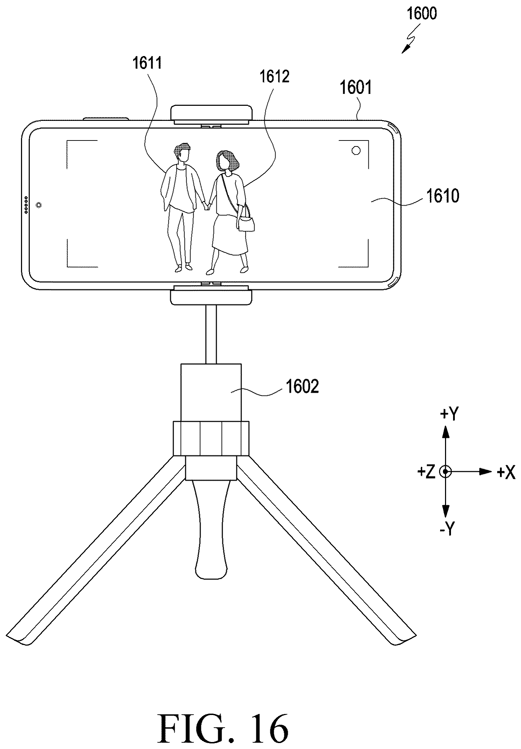

FIG. 16 is a diagram 1600 illustrating a method for providing the auto-framing function according to an embodiment.

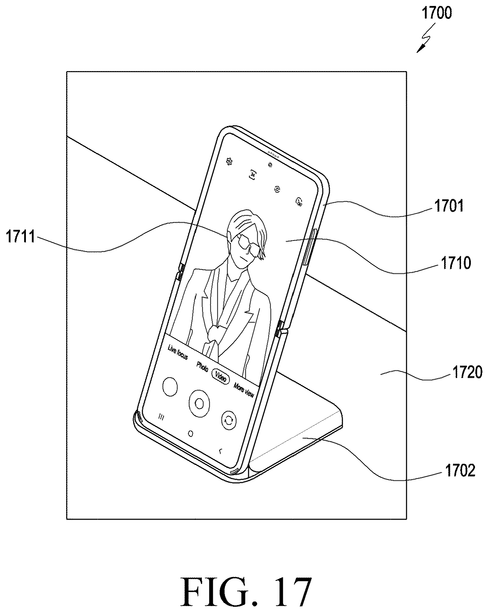

FIG. 17 is a diagram 1700 illustrating a method for providing the auto-framing function according to an embodiment.

Although methods for providing the auto-framing function in a flexible electronic device have been described with reference to FIG. 3A to FIG. 14, this is not limitative. Hereinafter, a method for providing the auto-framing function in an electronic device other than the flexible electronic device (e.g., an electronic device including no flexible display or a bar-type electronic device) will be described with reference to FIG. 15 to FIG. 17.

Referring to FIG. 15 to FIG. 17, in operation 1501, in an embodiment, the electronic device 101 (e.g., the processor 120) may identify whether the posture of electronic device 101 matches a specified posture with reference to the sensor module 176 (e.g., an inertial sensor).

In an embodiment, the operation of identifying whether the posture of the electronic device 101 matches a specified posture may include an operation of identifying whether the direction in which electronic device 101 is oriented (e.g., the direction in which the front surface of electronic device 101 or the center of the field of view of the camera module 180 is oriented) is identical to a specified direction (or falls in a specified direction range).

In an embodiment, the specified direction may be substantially perpendicular to the direction of gravity. For example, as shown in FIG. 16, in case that electronic device 1601 is cradled on an object (e.g., a cradle 1602), the direction in which the electronic device 1601 is oriented may be a direction (e.g., the direction along the +Z axis) substantially perpendicular to the direction of gravity (e.g., the direction along the -Y axis).

In an embodiment, the specified direction range may extend from a direction rotated clockwise by a specified angle with reference to the direction perpendicular to the direction of gravity to a direction rotated counterclockwise by a specified angle from the direction perpendicular to the direction of gravity.

In an embodiment, the electronic device 1601 may execute a camera application, based on an input (e.g., a user input). The electronic device 1601 may display an execution screen of the camera application through the display module 1610, based on the camera application being executed. The electronic device 1601 may acquire an input (e.g., a user input) for executing a video function while the camera application is executed. The electronic device 1601 may identify whether the posture of the electronic device 1601 matches a specified posture, based on the input for executing the video function.

In an embodiment, the electronic device 1601 may further perform an operation of identifying, with reference to the sensor module, whether the magnitude of movement of the electronic device 1601 is equal to or less than a specified magnitude.

In operation 1503, in an embodiment, the electronic device 101 (e.g., the processor 120) may identify whether an object (e.g., the subjects 1611 and 1612 in FIG. 16) is detected within an image acquired through the camera module.

Operation 1503 is at least partially identical or similar to operation 503, and detailed descriptions thereof will be omitted herein.

In operation 1505, in an embodiment, the electronic device 101 (e.g., the processor 120) may activate the auto-framing function, based on the posture of the electronic device 101 matching a specified posture, and an object being detected within an image acquired through the camera module 180.

Operation 1505 is at least partially identical or similar to operation 505, and detailed descriptions thereof will be omitted herein.

In an embodiment, the electronic device 101 may activate the auto-framing function, based on the direction in which the electronic device 101 is oriented (e.g., the direction in which the front surface of the electronic device or the center of the field of view of the camera module is oriented) being substantially identical to a specified direction (or falling in a specified direction range), and an object being detected within an image acquired through the camera module 180.

In an embodiment, the electronic device 101 may activate the auto-framing function, based on the direction in which the electronic device is oriented being substantially identical to a specified direction, the magnitude of movement of the electronic device 101 being equal to or less than a specified magnitude, and an object being detected within an image acquired through the camera module 180.

It has been assumed in the aforementioned examples that the auto-framing function is activated based on identifying that the posture of the electronic device 101 matches a specified posture, but this is not limitative.

In an embodiment, the electronic device 101 (e.g., the processor 120) may identify whether the electronic device 101 is cradled on an external electronic device, in addition to the operation of identifying that the posture of the electronic device 101 matches a specified posture, or instead of the operation of identifying that the posture of the electronic device 101 matches a specified posture. For example, as shown in FIG. 17, the electronic device 1701 may be cradled on an external electronic device 1702 (e.g., a cradle capable of wirelessly charging the electronic device 1701 while cradling the electronic device 1701) placed on a desk surface 1720. In case that the electronic device 1701 is cradled on the external electronic device 1702, the electronic device 1701 may connect wirelessly (or via a wired connection) to the external electronic device 1702 through a communication module (e.g., a near field communication (NFC) communication module). The electronic device 1701 may identify that the electronic device 1701 is cradled on the external electronic device 1702, based on the establishment of a connection with the external electronic device 1702. The electronic device 1701 may activate the auto-framing function in case that the electronic device 1701 is cradled on the external electronic device 1702, and in case that a subject (e.g., a subject corresponding to an object 1711 included in an image displayed through the display module 1710) is recognized within an image acquired through the camera module 180 of the electronic device 1701.

An electronic device 401 according to an embodiment may include: a housing including a first housing and a second housing; a hinge portion configured to enable the first housing and the second housing to rotate; a first display 411 disposed on the first housing and the second housing; at least one camera (e.g., camera module 430); at least one sensor; at least one processor 450; and memory 440 storing instructions. The instructions, when executed by the at least one processor 450, may cause the electronic device 401 to identify, through the at least one sensor, whether the electronic device 401 is folded within a specified angle range. The instructions, when executed by the at least one processor 450, may cause the electronic device 401 to identify whether an object is detected within an image acquired through the at least one camera (e.g., camera module 430). The instructions, when executed by the at least one processor 450, may cause the electronic device 401 to activate an auto-framing function, based on the electronic device 401 being folded within the specified angle range and the object being detected within the image.

In an embodiment, the instructions, when executed by the at least one processor 450, may cause the electronic device 401 to identify, through the at least one sensor, whether a magnitude of a movement of the electronic device 401 is equal to or less than a specified magnitude. The instructions, when executed by the at least one processor 450, may cause the electronic device 401 to activate the auto-framing function, based on the electronic device 401 being folded within the specified angle range, the magnitude of the movement of the electronic device 401 being equal to or less than the specified magnitude, and the object being detected within the image.

In an embodiment, the instructions, when executed by the at least one processor 450, may cause the electronic device 401 to deactivate a hand-shake correction function, based on the electronic device 401 being folded within the specified angle range, the magnitude of the movement of the electronic device 401 being equal to or less than the specified magnitude, and the object being detected within the image.

In an embodiment, the at least one camera (e.g., camera module 430) may include a first camera having a first field of view and a second camera having a second field of view wider the first field of view. The instructions, when executed by the at least one processor 450, may cause the electronic device 401 to switch a camera for acquiring images from the first camera to the second camera, based on the electronic device 401 being folded within the specified angle range, and the object being detected within the image.

In an embodiment, the electronic device 401 may further include a second display 412 disposed on a second surface of the housing, the second surface facing in a direction opposite to a direction in which a first surface of the housing faces, the first display 411 being disposed on the first surface. The instructions, when executed by the at least one processor 450, may cause the electronic device 401 to identify whether the electronic device 401 is operating in a specified mode, as at least a part of identifying whether the electronic device 401 is folded within the specified angle range. The specified mode may include a first mode in which an image acquired through the at least one camera (e.g., camera module 430) while the electronic device 401 is folded within the specified angle range is displayed through the second display 412, or a second mode in which an image acquired through the at least one camera (e.g., camera module 430) while the electronic device 401 is folded within the specified angle range is displayed through the first display 411.

In an embodiment, the instructions, when executed by the at least one processor 450, may cause the electronic device 401 to detect a movement of the electronic device 401, through the at least one sensor, while the auto-framing function is performed. The instructions, when executed by the at least one processor 450, may cause the electronic device 401 to output information indicating that the movement of the electronic device 401 is detected, based on a movement of the electronic device 401 being detected. The instructions, when executed by the at least one processor 450, may cause the electronic device 401 to, after the information is output, determine, based on a user input, whether to deactivate the auto-framing function.

In an embodiment, the instructions, when executed by the at least one processor 450, may cause the electronic device 401 to detect the movement of the electronic device 401, through the at least one sensor, while the auto-framing function is performed. The instructions, when executed by the at least one processor 450, may cause the electronic device 401 to deactivate the auto-framing function, based on a movement of the electronic device 401 having a magnitude equal to or greater than a specified magnitude being detected for a specified time.

In an embodiment, the instructions, when executed by the at least one processor 450, may cause the electronic device 401 to identify whether at least one first condition specified for activating the auto-framing function is satisfied, while acquiring an image through the at least one camera (e.g., camera module 430). The at least one first condition may include at least one of: a condition in which a second subject is newly recognized within the field-of-view area of the at least one camera (e.g., camera module 430) in a state in which a first subject is recognized; a condition in which an utterance of the second subject located within the field-of-view area of the at least one camera (e.g., camera module 430) is detected in a state in which the first subject is recognized; a condition in which a gaze of the first subject is detected as being directed toward the second subject in a state in which the first subject is recognized; a condition in which a movement of the first subject is detected within the field-of-view area of the at least one camera (e.g., camera module 430) in a state in which the first subject is recognized; or a condition in which the first subject performs a specified motion in a state in which the first subject is recognized.

In an embodiment, the instructions, when executed by the at least one processor 450, may cause the electronic device 401 to identify whether at least one second condition specified for deactivating the auto-framing function is satisfied, while the auto framing-function is performed. The at least one second condition may include at least one of: a condition in which a movement of the electronic device 401 having a magnitude greater than a specified magnitude is detected; a condition in which the electronic device 401 is switched from a state in which the electronic device (401) is folded within a specified angle range to another state; a condition in which a specified time has elapsed after the recognized subject moves outside the field-of-view area of the at least one camera (e.g., camera module 430); or a condition in which a value indicating degree of a movement of the recognized subject exceeds a threshold value at which subject recognition is possible.

A method for providing an auto-framing function in an electronic device 401 according to an embodiment may include an operation of identifying, through at least one sensor of the electronic device 401, whether the electronic device 401 is folded within a specified angle range. The method may include an operation of identifying whether an object is detected within an image acquired through the at least one camera (e.g., camera module 430) of the electronic device 401. The method may include activating an auto-framing function, based on the electronic device 401 being folded within the specified angle range and the object being detected within the image.

In an embodiment, the method may further include identifying, through the at least one sensor, whether a magnitude of a movement of the electronic device 401 is equal to or less than the specified magnitude. The activating an auto-framing function may include activating the auto-framing function, based on the electronic device 401 being folded within the specified angle range, the magnitude of the movement of the electronic device 401 being equal to or less than the specified magnitude, and the object being detected within the image.

In an embodiment, the method may further include deactivating a hand-shake correction function, based on the electronic device 401 being folded within the specified angle range, the magnitude of the movement of the electronic device 401 being equal to or less than the specified magnitude, and the object being detected within the image.

In an embodiment, the method may further include switching a camera for acquiring images from a first camera to a second camera, based on the electronic device 401 being folded within the specified angle range, and the object being detected within the image.

In an embodiment, the identifying whether the electronic device 401 is folded within the specified angle range may further include identifying whether the electronic device 401 is operating in a specified mode. The specified mode may include a first mode in which an image acquired through the at least one camera (e.g., camera module 430) while the electronic device 401 is folded within the specified angle range is displayed through the second display 412, or a second mode in which an image acquired through the at least one camera (e.g., camera module 430) while the electronic device 401 is folded within the specified angle range is displayed through the first display 411.

In an embodiment, the method may further include detecting a movement of the electronic device 401, through the at least one sensor, while the auto-framing function is performed. The method may further include outputting information indicating that a movement of the electronic device 401 is detected, based on a movement of the electronic device 401 being detected. The method may further include, after the information is output, determining, based on a user inpt, whether to deactivate the auto-framing function.

In an embodiment, the method may further include detecting a movement of the electronic device 401, through the at least one sensor, while the auto-framing function is performed. The method may further include deactivating the auto-framing function, based on a movement of the electronic device 401 having a magnitude equal to or greater than a specified magnitude being detected for a specified time.

In an embodiment, the method may further include identifying whether at least one first condition specified for activating the auto-framing function is satisfied, while acquiring an image through the at least one camera (e.g., camera module 430). The at least one first condition may include at least one of: a condition in which a second subject is newly recognized within the field-of-view area of the at least one camera (e.g., camera module 430) in a state in which a first subject is recognized; a condition in which an utterance of the second subject located within the field-of-view area of the at least one camera (e.g., camera module 430) is detected in a state in which the first subject is recognized; a condition in which the gaze of the first subject is detected as being directed toward the second subject in a state in which the first subject is recognized; a condition in which a movement of the first subject is detected within the field-of-view area of the at least one camera (e.g., camera module 430) in a state in which the first subject is recognized; or a condition in which the first subject performs a specified motion in a state in which the first subject is recognized.

In an embodiment, the method may further include identifying whether at least one second condition specified for deactivating the auto-framing function is satisfied, while the auto framing-function is being performed. The at least one second condition may include at least one of: a condition in which a movement of the electronic device 401 having a magnitude greater than a specified magnitude is detected; a condition in which the electronic device 401 is switched from a state in which the electronic device (401) is folded within a specified angle range to another state; a condition in which a specified time has elapsed after the recognized subject moves outside the field-of-view area of the at least one camera (e.g., camera module 430); or a condition in which a value indicating degree of a movement of the recognized subject exceeds a threshold value at which subject recognition is possible.

An electronic device 101 according to an embodiment may include at least one camera (e.g., camera module 180), at least one sensor (e.g., sensor module 176), at least one processor 120, and memory 130 storing instructions. The instructions, when executed by the at least one processor 120, may cause the electronic device 101 to identify, through the at least one sensor 176, whether the posture of the electronic device 101 matches a specified posture. The instructions, when executed by the at least one processor 120, may cause the electronic device 101 to identify whether an object is detected within an image acquired through the at least one camera (e.g., camera module 180). The instructions, when executed by the at least one processor 120, may cause the electronic device 101 to activate an auto-framing function, based on the posture of the electronic device 101 being identified as matching the specified posture, and the object being detected within the image.

In an embodiment, the instructions, when executed by the at least one processor 120, may cause the electronic device 101 to identify that the electronic device 101 is cradled on an external electronic device. The instructions, when executed by the at least one processor 120, may cause the electronic device 101 to activate the auto-framing function, based on the posture of the electronic device 101 being identified as matching the specified posture, and the electronic device 101 being identified as cradled on an external electronic device, and the object being detected within the image.

In addition, the structure of data used in embodiments of the disclosure described above may be recorded in a computer-readable recording medium through various means. The computer-readable recording medium includes a storage medium such as a magnetic storage medium (for example, a ROM, a floppy disk, a hard disk, or the like) or an optically readable medium (for example, a CD-ROM, a DVD, or the like).

## Claims

1. An electronic device (401) comprising:
a housing comprising a first housing and a second housing;
a hinge portion configured to enable the first housing and the second housing to rotate;
a first display (411) disposed on the first housing and the second housing;
at least one camera (430);
at least one sensor (420);
at least one processor (450); and
memory (440) storing instructions that, when executed by the at least one processor (450), cause the electronic device (401) to:
identify, through the at least one sensor (420), whether the electronic device (401) is folded within a specified angle range,
identify whether an object is detected within an image acquired through the at least one camera (430), and
based on the electronic device (401) being folded within the specified angle range and the object being detected within the image, activate an auto-framing function.

2. The electronic device (401) of claim 1, wherein the instructions, when executed by the at least one processor (450), cause the electronic device (401) to:
identify, through the at least one sensor (420), whether a magnitude of a movement of the electronic device (401) is equal to or less than a specified magnitude, and
based on the electronic device (401) being folded within the specified angle range, the magnitude of the movement of the electronic device (401) being equal to or less than the specified magnitude, and the object being detected within the image, activate the auto-framing function.

3. The electronic device (401) of claim 1 or 2, wherein the instructions, when executed by the at least one processor (450), cause the electronic device (401) to:
based on the electronic device (401) being folded within the specified angle range, the magnitude of the movement of the electronic device (401) being equal to or less than the specified magnitude, and the object being detected within the image, deactivate a hand-shake correction function.

4. The electronic device (401) of one of claims 1 to 3, wherein the at least one camera (430) includes a first camera having a first field of view and a second camera having a second field of view wider than the first field of view, and
wherein the instructions, when executed by the at least one processor (450), cause the electronic device (401) to:
switch a camera for acquiring images from the first camera to the second camera, based on the electronic device (401) being folded within the specified angle range and the object being detected within the image.

5. The electronic device (401) of one of claims 1 to 4, further comprising a second display (412) disposed on a second surface of the housing, the second surface facing in a direction opposite to a direction in which a first surface of the housing faces, the first display (411) being disposed on the first surface,
wherein the instructions, when executed by the at least one processor (450), cause the electronic device (401) to:
identify whether the electronic device (401) is operating in a specified mode, as at least a part of identifying whether the electronic device (401) is folded within the specified angle range, and
wherein the specified mode includes a first mode in which an image acquired through the at least one camera (430) while the electronic device (401) is folded within the specified angle range is displayed through the second display (412), or a second mode in which an image acquired through the at least one camera (430) while the electronic device (401) is folded within the specified angle range is displayed through the first display (411).

6. The electronic device (401) of one of claims 1 to 5, wherein the instructions, when executed by the at least one processor (450), cause the electronic device (401) to:
detect a movement of the electronic device (401), through the at least one sensor (420), while the auto-framing function is performed,
output information indicating that the movement of the electronic device (401) is detected, based on the movement of the electronic device (401) being detected, and
after the information is output, determine, based on a user input, whether to deactivate the auto-framing function.

7. The electronic device (401) of one of claims 1 to 6, wherein the instructions, when executed by the at least one processor (450), cause the electronic device (401) to:
detect a movement of the electronic device (401), through the at least one sensor (420), while the auto-framing function is performed, and
deactivate the auto-framing function, based on the movement of the electronic device (401) having a magnitude equal to or greater than a specified magnitude being detected for a specified time.

8. The electronic device (401) of one of claims 1 to 7, wherein the instructions, when executed by the at least one processor (450), cause the electronic device (401) to:
while acquiring an image through the at least one camera (430), identify whether at least one first condition specified for activating the auto-framing function is satisfied, and
wherein the at least one first condition comprises at least one of:
a condition in which a second subject is newly recognized within the field-of-view area of the at least one camera (430) in a state in which a first subject is recognized,
a condition in which an utterance of the second subject located within the field-of-view area of the at least one camera (430) is detected in a state in which the first subject is recognized,
a condition in which a gaze of the first subject is detected as being directed toward the second subject in a state in which the first subject is recognized,
a condition in which a movement of the first subject is detected within the field-of-view area of the at least one camera (430) in a state in which the first subject is recognized, or
a condition in which the first subject performs a specified motion in a state in which the first subject is recognized.

9. The electronic device (401) of one of claims 1 to 8, wherein the instructions, when executed by the at least one processor (450), cause the electronic device (401) to:
identify whether at least one second condition specified for deactivating the auto-framing function is satisfied, while the auto framing-function is performed, and
wherein the at least one second condition comprises at least one of:
a condition in which a movement of the electronic device (401) having a magnitude greater than a specified magnitude is detected,
a condition in which the electronic device (401) is switched from a state in which the electronic device (401) is folded within a specified angle range to another state,
a condition in which a specified time has elapsed after the recognized subject moves outside the field-of-view area of the at least one camera (430), or
a condition in which a value indicating degree of a movement of the recognized subject exceeds a threshold value at which subject recognition is possible.

10. A method for providing an auto-framing function in an electronic device (401), the method comprising:
identifying, through at least one sensor (420) of the electronic device (401), whether the electronic device (401) is folded within a specified angle range;
identifying whether an object is detected within an image acquired through the at least one camera (430) of the electronic device (401); and
based on the electronic device (401) being folded within the specified angle range and the object being detected within the image, activating an auto-framing function.

11. The method of claim 10, further comprising:
identifying, through the at least one sensor (420), whether a magnitude of a movement of the electronic device (401) is equal to or less than a specified magnitude,
wherein the activating of an auto-framing function comprises:
based on the electronic device (401) being folded within the specified angle range, the magnitude of the movement of the electronic device (401) being equal to or less than the specified magnitude, and the object being detected within the image, activating the auto-framing function.

12. The method of claim 10 or 11, further comprising:
deactivating a hand-shake correction function, based on the electronic device (401) being folded within the specified angle range, the magnitude of the movement of the electronic device (401) being equal to or less than the specified magnitude, and the object being detected within the image.

13. The method of one of claims 10 to 12, further comprising:
switching a camera for acquiring images from a first camera to a second camera, based on the electronic device (401) being folded within the specified angle range and the object being detected within the image.

14. The method of one of claims 10 to 13, wherein the identifying of whether the electronic device (401) is folded within the specified angle range comprises:
identifying whether the electronic device (401) is operating in a specified mode,
wherein the specified mode comprises a first mode in which an image acquired through the at least one camera (430) while the electronic device (401) is folded within the specified angle range is displayed through the second display (412), or a second mode in which an image acquired through the at least one camera (430) while the electronic device (401) is folded within the specified angle range is displayed through the first display (411).

15. A non-transitory computer-readable medium in which computer-executable instructions are recorded, the computer-executable instructions, when executed by at least one processor (450) of an electronic device (401), causing the electronic device (401) to:
identify, through at least one sensor (420) of the electronic device (401), whether the electronic device (401) is folded within a specified angle range;
identify whether an object is detected within an image acquired through the at least one camera (430) of the electronic device (401); and
based on the electronic device (401) being folded within the specified angle range and the object being detected within the image, activate an auto-framing function.
